# EUROPEAN PATENT APPLICATION

(11) **EP 4 451 242 A1**
(43) Date of publication of application: **23.10.2024**
(21) Application number: 22918646.5
(22) Date of filing: 07.01.2022
(51) Int. Cl.: G08B 13/181

(54) **LASER SCANNING SENSOR**

(71) Applicant: Optex Co., Ltd., Otsu-shi, Shiga 520-0101 (JP)
(72) Inventor: FUJIWARA Kunio, Otsu-shi, Shiga 520-0101 (JP)
(74) Representative: Reddie & Grose LLP
(86) International application number: PCT/JP2022/000368
(87) International publication number: WO 2023/132057

(57) **Abstract**

A laser scanning sensor (100) includes a laser range finder (110), a scanning mechanism (120), a distance data acquisition unit (130), memory (160), an object detection processing unit (135), an object detection area determination unit (140), an object detection area alarm activation control unit (145), and an alarm activation output control unit (150). The object detection area determination unit (140) determines, based on a determination result by the object detection processing unit (135), whether any detection target object (15) is present in a caution area (B100) and a determination area (C100). The object detection area alarm activation control unit (145) controls, based on the determination result by the object detection processing unit (135) and a determination result by the object detection area determination unit (140), whether to activate an alarm when the detection target object (15) is present in the caution area (B100).

## Description

### Technical Field

The present invention relates to a laser scanning sensor that detects an intruder or the like on the premises of a building. In particular, the present invention relates to a laser scanning sensor that can, for example, limit a caution area more accurately, as required during busy hours when entry and exit of authorized persons occur frequently or in other situations, without relying on manual operation, external device connection, time-linked operation, or the like.

### Background Art

Conventional technology has proposed a laser scanning sensor that is equipped with a laser range finder using a laser beam as a light source. Even if an automobile came in and parked in a caution area or a harmless obstacle was installed therein after the caution area was set, this laser scanning sensor can accurately detect an intended target intruder (for example, see PTL 1).

This "laser scanning sensor" is characterized by including a laser range finder 110, a scanning mechanism 120, a distance data acquisition unit 130, memory 160 that stores installation state information and detection area information in each measurement direction, a human body determination unit 140, a detection area information update unit 140 that updates the detection area information under a predetermined condition, and an alarm output control unit 150. The human body determination unit 140 extracts, from acquired distance data, any portion or portions potentially corresponding to a human body from among objects whose entry or travel is recognized by comparison with the detection area information. The human body determination unit 140 then excludes, from these extracted portions, one or more extracted portions whose travel distance in a predetermined time is within a predetermined distance, based on a time-series travel status of each extracted portion. The human body determination unit 140 finally determines whether the rest of the extracted portions correspond to a human body.

### Citation List

### Patent Literature

PTL 1: Japanese Patent Publication JP 5263692 B2

### Summary of Invention

### Technical Problem

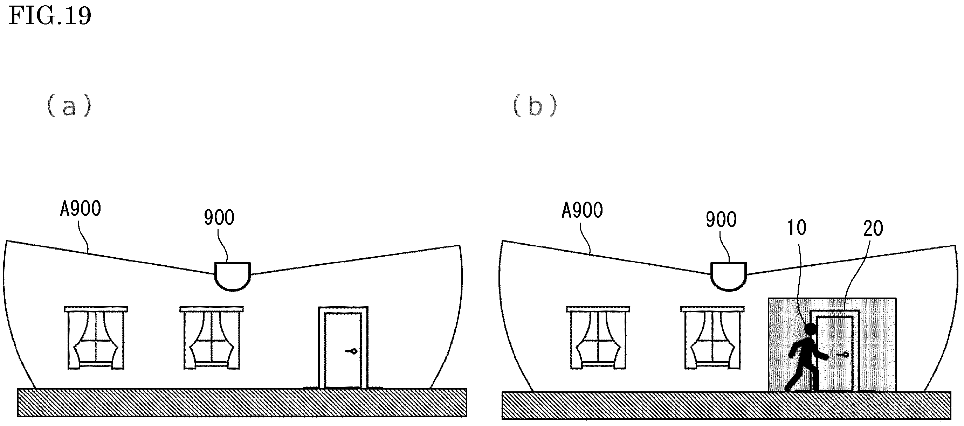

Figs. 19(a) and 19(b) schematically illustrate a detection area A900 defined by a conventional laser scanning sensor 900. Fig. 19(a) shows an example of a midnight monitoring situation, and Fig. 19(b) shows an example of a daytime monitoring situation.

At midnight when entry and exit of authorized persons do not occur, the laser scanning sensor may monitor the detection area A900 entirely, as shown in Fig. 19(a). On the other hand, during the daytime when entry and exit of authorized persons 10 occur frequently, the laser scanning sensor needs to limit its caution area by excluding a doorway 20 and its surroundings by a mask function or the like (by disabling an object detection function), as shown in Fig. 19(b). This setting has to be changed by manual operation of a DIP switch or the like that is provided in advance in the laser scanning sensor 900, or by communication through an external device connected by wire or wirelessly, or has to be changed automatically in a time- or otherwise linked manner.

In light of the problem in the conventional art, a purpose of the present invention is to provide a laser scanning sensor that is capable of dynamically setting or enabling/disabling a caution area in accordance with an ever-changing situation, without relying on manual operation, an external device, etc.

### Solution to Problem

To achieve the above-mentioned purpose, a laser scanning sensor according to the present invention includes: a laser range finder that emits a laser beam and measures a distance to an object that is present in an emission direction of the laser beam, based on a time until the emitted beam is reflected by the object and returns to the laser range finder; a scanning mechanism unit that changes a measurement direction for the laser range finder; a distance information acquisition unit that defines a detection area by periodically performing the measurement by the laser range finder, with the measurement direction being changed by the scanning mechanism unit, and that acquires distance information in the detection area, the distance information in the detection area being acquired in each measurement direction on a time-series basis; an information storage unit that stores reference distance information in each measurement direction as detection area information, and that stores at least one caution area and a corresponding determination area, the at least one caution area being set as a zone to be actually monitored in the detection area, and the determination area being set correspondingly to each of the at least one caution area; an object detection processing unit that extracts one or more portions potentially corresponding to a detection target object, from the distance information acquired by the distance information acquisition unit, and that determines whether each of the one or more extracted portions is the detection target object, based on a time-series travel status of the respective extracted portion; an object detection area determination unit that determines, based on a determination result by the object detection processing unit, whether the detection target object is present in both the caution area and the determination area or whether the detection target object is present in the determination area; an alarm activation control unit that controls, based on the determination result by the object detection processing unit and a determination result by the object detection area determination unit, whether to activate an alarm when the detection target object is present in the caution area; and an alarm activation output control unit that outputs an alarm activation signal in response to the control by the alarm activation control unit.

The laser scanning sensor according to this configuration is capable of dynamically setting or enabling/disabling the caution area in accordance with an ever-changing situation, without relying on manual operation, an external device, etc. The laser scanning sensor is further capable of distinguishing a detection target, for example, by exclusively detecting an object having a particular shape or exclusively detecting an object traveling in a particular direction.

In the laser scanning sensor according to the present invention, in a situation where the detection target object is present in the determination area, the alarm activation control unit may provide control to activate an alarm when the detection target object is also present in the caution area; and, in a situation where the detection target object is not present in the determination area, the alarm activation control unit may provide control to deactivate an alarm when the detection target object is present in the caution area. Alternatively, in a situation where the detection target object is present in the determination area, the alarm activation control unit may provide control to deactivate an alarm when the detection target object is also present in the caution area; and, in a situation where the detection target object is not present in the determination area, the alarm activation control unit may provide control to activate an alarm when the detection target object is present in the caution area. One of these controls may be selected in accordance with the installation site and the detection target object.

The laser scanning sensor according to this configuration can provide appropriate security in accordance with the installation site, the detection target object, etc., by properly selecting one of these controls.

In the laser scanning sensor according to the present invention, the information storage unit can store a control mode for the alarm activation control unit, the control mode being selected from a first control mode and a second control mode. Provided that the control mode stored in the information storage unit is the first control mode, in a situation where the detection target object is present in the determination area, the alarm activation control unit may provide control to activate an alarm when the detection target object is also present in the caution area; and, in a situation where the detection target object is not present in the determination area, the alarm activation control unit may provide control to deactivate an alarm when the detection target object is present in the caution area. Provided that the control mode stored in the information storage unit is the second control mode, in a situation where the detection target object is present in the determination area, the alarm activation control unit may provide control to deactivate an alarm when the detection target object is also present in the caution area; and, in a situation where the detection target object is not present in the determination area, the alarm activation control unit may provide control to activate an alarm when the detection target object is present in the caution area.

The laser scanning sensor according to this configuration can provide appropriate security in accordance with the installation site, the detection target object, etc., simply by rewriting the control mode stored in the information storage unit.

In the laser scanning sensor according to the present invention, the alarm activation control unit may keep a status that indicates the presence of the detection target object, for a first predetermined time that is set in advance, after the detection target object that was present in the determination area has disappeared. Alternatively, the alarm activation control unit may withhold activation of an alarm, for a second predetermined time that is set in advance, after the detection target object was detected in the caution area.

The laser scanning sensor according to this configuration can provide more appropriate security in accordance with the installation site, the detection target object, etc.

The laser scanning sensor according to the present invention may further include a display device. When the alarm activation control unit provides control to deactivate an alarm, the alarm activation output control unit may provide an indication by the display device. Alternatively, the alarm activation output control unit may externally report confirmed alarm activation information in the caution area.

The laser scanning sensor according to the present invention may further include an operating unit that enables selection from an external input and an image processing result. The alarm activation control unit may assume that the detection target object is present in the determination area associated in advance, in accordance with the external input or the image processing result selected by the operating unit.

The laser scanning sensor according to the present invention may further include an image capturing device. The detection target object may be detected based on an image processing result of an image acquired by the camera image capturing device. The alarm activation control unit may obtain the distance information corresponding to a position of the detection target object in the acquired image, and may control whether to activate an alarm when the detection target object is present in the caution area.

### Advantageous Effects of Invention

The laser scanning sensor according to the present invention is capable of dynamically setting or enabling/disabling a caution area in accordance with an ever-changing situation, without relying on manual operation, an external device, etc. The laser scanning sensor is further capable of distinguishing a detection target, for example, by exclusively detecting an object having a particular shape or exclusively detecting an object traveling in a particular direction.

### Brief Description of Drawings

Fig. 1 is a block diagram showing the general configuration of a laser scanning sensor 100 according to the first embodiment of the present invention.
Fig. 2 is a schematic plan view showing a detection area A100 defined by the laser scanning sensor 100.
Fig. 3 is a schematic illustration exemplifying a caution area B100 and a determination area C100 defined in the detection area A100 by the laser scanning sensor 100.
Figs. 4(a)-4(d) are illustrations for describing alarm activation control in two modes (i.e., an alarm trigger mode and an alarm deactivation mode) that set actions for controlling whether the laser scanning sensor 100 should activate an alarm.
Fig. 5 is a timing diagram exemplifying a timing setting for evaluating object detection statuses in the caution area B100 and the determination area C100 by the laser scanning sensor 100.
Fig. 6 is a timing diagram that describes a determination extension time and an alarm activation waiting time that are set to adjust a timing to start a determination operation by the laser scanning sensor 100.
Fig. 7 is a schematic illustration of a usage example for distinguishably detecting a truck 16 and any other object such as a passenger vehicle 17, in a truck-only parking space or the like.
Fig. 8 is a schematic illustration of a usage example for detecting a car break-in, in a parking lot or the like.
Fig. 9 is a schematic illustration of a usage example for detecting an intruder 11 on the premises of a building or the like.
Fig. 10 is a schematic illustration of a usage example for detecting an intruder 11 at a doorway to the premises of a building or the like, under surveillance of a security guard.
Fig. 11 is a flowchart showing entire processing of the laser scanning sensor 100.
Fig. 12(a) is a flowchart describing a subroutine for updating alarm activation information in the determination/caution areas. Fig. 12(b) is a flowchart describing a subroutine for processing in the determination extension time. Fig. 12(c) is a flowchart describing a subroutine for processing in the alarm activation waiting time. Fig. 12(d) is a flowchart describing a subroutine for determination processing.
Fig. 13 shows flowcharts for determination operations, wherein Fig. 13(a) is a flowchart of a subroutine for constant processing, and Fig. 13(b) is a flowchart of a subroutine for limited processing during the alarm activation waiting time.
Fig. 14 shows flowcharts for actions, wherein Fig. 14(a) is a flowchart of a subroutine for trigger processing, and Fig. 14(b) is a flowchart of a subroutine for deactivation processing.
Fig. 15 is a flowchart of a subroutine for alarm activation output.
Fig. 16(a) is a front view of a laser scanning sensor 200 according to the second embodiment of the present invention. Fig. 16(b) is a schematic plan view for comparison between an image-capturing range R201 by an internal camera 201 and a laser irradiation range R202.
Fig. 17(a) is a schematic illustration that exemplifies an image captured by the internal camera 201 as installed horizontally. Fig. 17(b) is a schematic plan view that exemplifies step numbers in the laser irradiation range R202 in Fig. 16(b).
Fig. 18(a) is a schematic descriptive illustration of a laser scanned image captured when an entering object is detected by the laser scanning sensor 200 as installed vertically. Fig. 18(b) is a schematic illustration that exemplifies an image captured by the internal camera 201.
Figs. 19(a) and 19(b) are schematic illustrations of a detection area A900 defined by a conventional laser scanning sensor 900, wherein Fig. 19(a) shows an example of a midnight monitoring situation, and Fig. 19(b) shows an example of a daytime monitoring situation.

### Description of Embodiments

Embodiments of the present invention are hereinafter described with reference to the drawings.

### First embodiment

### 1.1 General configuration of the laser scanning sensor 100

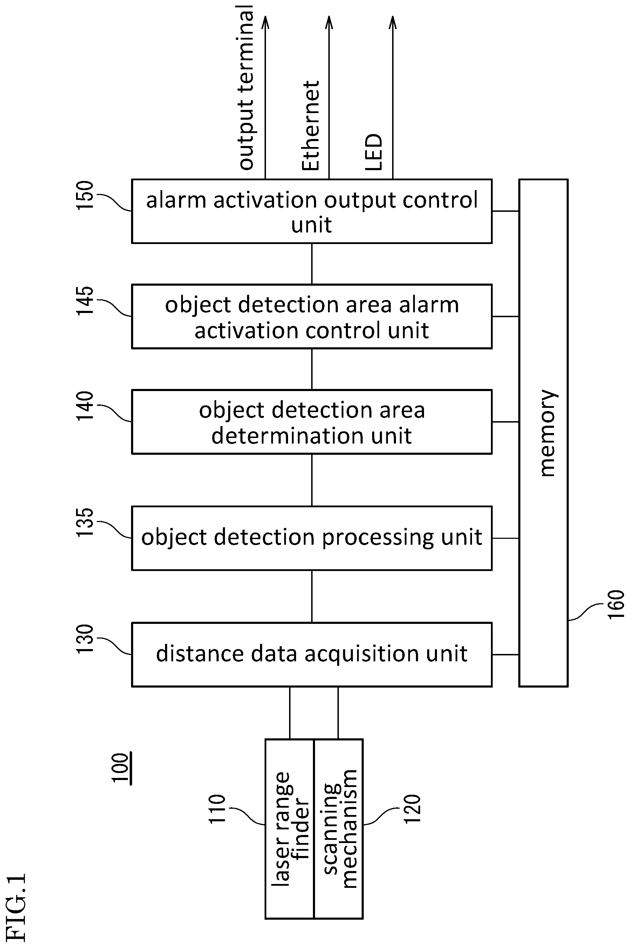

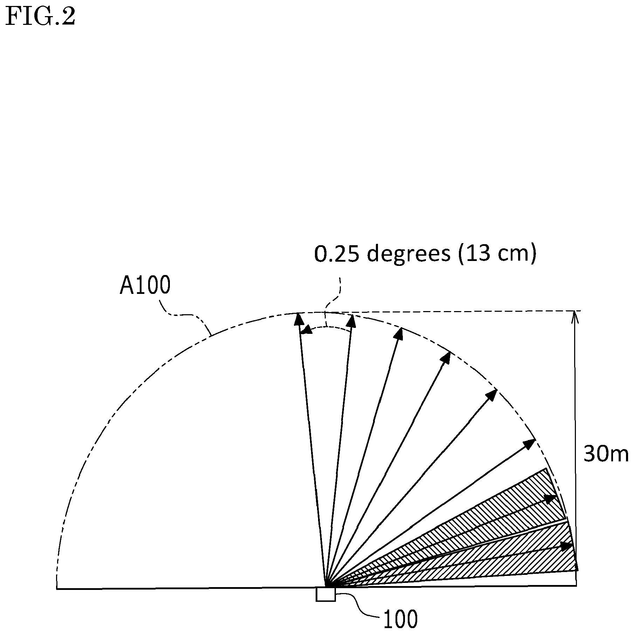

Fig. 1 is a block diagram showing the general configuration of a laser scanning sensor 100 according to the first embodiment of the present invention. Fig. 2 is a schematic plan view showing a detection area A100 defined by the laser scanning sensor 100. For convenience of description, intervals between adjacent distance measurement directions in Fig. 2 are much wider than actual intervals.

As shown in Fig. 1, the laser scanning sensor 100 includes a laser range finder 110, a scanning mechanism 120, a distance data acquisition unit 130, an object detection processing unit 135, an object detection area determination unit 140, an object detection area alarm activation control unit 145, an alarm activation output control unit 150, and memory 160.

The laser range finder 110 measures an accurate distance to an object by emitting a pulsed laser beam and precisely measuring a very short time until the beam is reflected by the object present in an emission direction of the laser beam and returns to the laser range finder. In the laser range finder 110, a light-emitting element for the laser beam may be, for example, a semiconductor laser diode (LD) or the like. A light-receiving element may be, for example, an avalanche photodiode (APD) or the like. Desirably, a dedicated hardware circuit or the like is provided to perform operations such as drive control of the light-emitting element and measurement of the return time of the reflected beam. As a general feature of the laser range finder, accurate distance measurement is ensured up to a considerably long distance, for example, a maximum of several tens of meters or much further in some cases. In this embodiment, the maximum detection distance of the laser range finder 110 is assumed to be 30 meters.

The scanning mechanism 120 is configured to be rotatable by a built-in motor or the like (not shown), and is mechanically connected with at least a part of the laser range finder 110 so as to change a distance measurement direction (angle) by the laser range finder 110. For example, the laser range finder 110 may be configured to rotate only at an optical system part thereof. Alternatively, the laser range finder 110 may be configured to rotate entirely or otherwise. When the scanning mechanism 120 rotates in a predetermined direction at a constant speed, the distance measurement direction by the laser range finder 110 changes in conjunction with the rotation.

While the scanning mechanism 120 is changing the measurement direction and the laser range finder 110 repeats the measurement periodically, the distance data acquisition unit 130 defines the detection area A100 as shown in Fig. 2, and acquires distance data in the detection area A100. The distance data in the detection area A100 is acquired in each measurement direction (also called "step") at a predetermined angular interval, on a time-series basis at a predetermined time interval. Among the distance data acquired in each measurement direction, the data acquired, for example, just after the start of the operation of the distance data acquisition unit 130 or after a lapse of a predetermined time is stored in the memory 160 as reference distance data.

Let us consider an example in which the scanning mechanism 120 has a scan cycle T of 50 ms (scan 20 times per second) and allows emission of a pulsed laser beam in a range of 180 degrees or a half rotation, and in which the pulsed laser beam having a pulse width of 10 ns is emitted at an emission cycle of 34.7 µs. Then, the distance can be measured 720 times in a range of 180 degrees. The angular interval in this case is 0.25 degrees, which corresponds to as small as about 13 cm even 30 meters away, as shown in Fig. 2. This indicates a quite high spatial resolution in the detection area A100. Hence, based on the distance data acquired by the distance data acquisition unit 130, the laser scanning sensor can identify the position, size (width), shape, etc. of a detected object quite accurately, and can thereby determine whether the detected object is a human body or not. Even when more than one human body is present in the detection area A100, the laser scanning sensor can identify each human body individually. Besides, such distance data is available at every scan cycle T of 50 ms. Note that the above numerical values are merely given as an example.

In the case shown in Fig. 2, the laser range finder 110 is installed horizontally and repeats the measurement periodically while the scanning mechanism 120 is changing the measurement direction parallel to the ground. However, the installation state is not limited thereto. For example, the laser range finder 110 may be installed at a certain height from the ground, and oriented straightly downward or obliquely downward. By storing the installation state information (specifically, installation height, distancemeasuring orientation, etc.) in the memory 160, the laser range finder 110 can also calculate the height of a target object by further referring to the installation state information.

The object detection processing unit 135 initially analyzes the distance data obtained by the distance data acquisition unit 130. The distance data in each measurement direction is compared with corresponding reference distance data stored in the memory 160. Any change in the distance data in a certain measurement direction suggests possible entry of an object or possible travel of an existing object in that direction. Through two-dimensional development based on the respective measurement directions of the distance data, the object detection processing unit 135 extracts any portion presumably corresponding to the shape of a detection target object in accordance with the shape, range, etc. of the entering or traveling object.

As described above, the distance data is acquired on a time-series basis by the distance data acquisition unit 130. After extracting each portion that is presumed to be a potential detection target object in the distance data, the object detection processing unit 135 keeps track of how the extracted portion changes in subsequent distance data, thereby identifies a travel status of the extracted portion, and then makes following judgments. If the trace of travel is noticeably discontinuous, for example, it is highly likely that the extracted portion is not a detection target object. On the other hand, if the trace of travel is completely stationary or the travel distance is very small, the extracted portion is at least something/someone other than an alarming intruder. Further in consideration of the travel direction or the like, the object detection processing unit 135 can more accurately judge whether the extracted portion corresponds to an alarming intruder or just a passerby walking near the boundary of the detection area A100. Putting the above judgment result and other factors together, the object detection processing unit 135 determines the presence or absence of an alarming detection target object such as a human body.

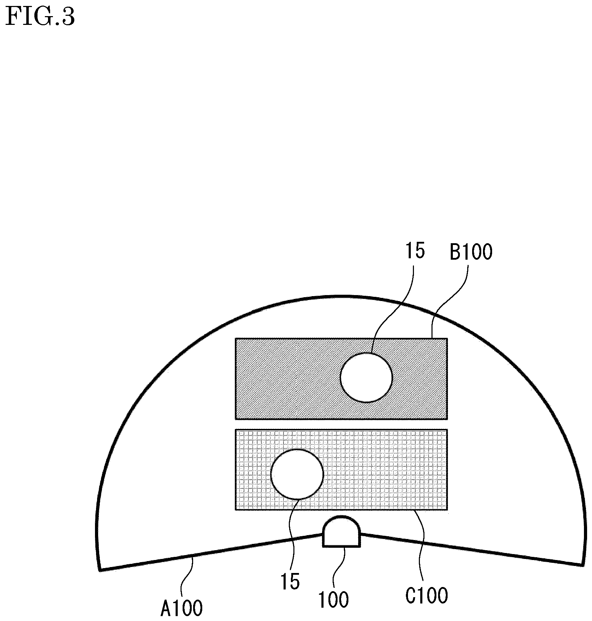

Based on the determination result by the object detection processing unit 135, the object detection area determination unit 140 determines whether any detection target object 15 is present in a caution area B100 (to be described with reference to Fig. 3) and a determination area C100 (to be described with reference to Fig. 3). Alternatively, based on the determination result by the object detection processing unit 135, the object detection area determination unit 140 may only determine whether a detection target object 15 is present in the determination area C100. In a case where a plurality of caution areas B100 is defined, a corresponding number of determination areas C100 is defined as well. In this case, the object detection area determination unit 140 performs the determination for each area.

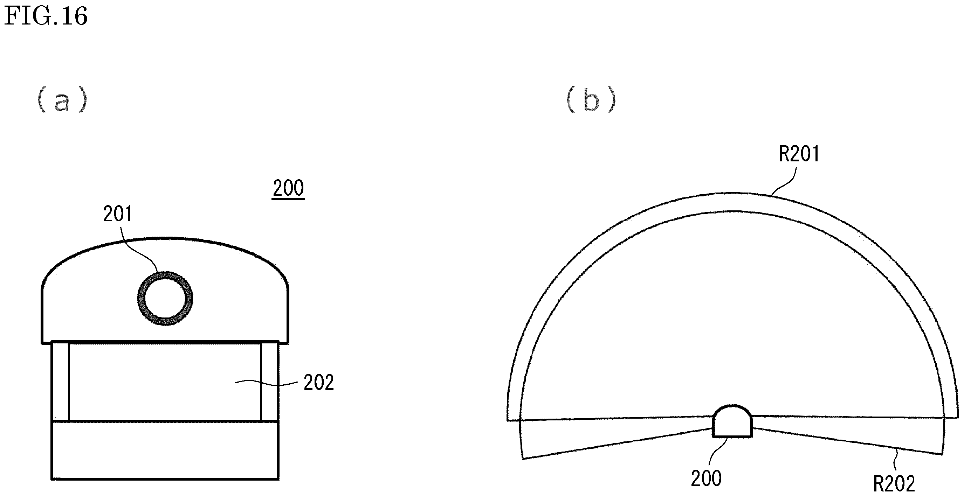

The determination condition is not limited to the presence or absence of a detection target object 15 in the determination area C100. For example, an external input terminal provided in the laser scanning sensor 100 may serve as a determination condition. Specifically, for example, such an external input terminal may be operated by a security guard to disable a particular caution area. Additionally, as described later with reference to Figs. 16-18, an image processing result of an image acquired by an internal camera may also serve as a determination condition. Furthermore, a switch or the like may be provided to select which of the external input terminal or the internal camera should be used.

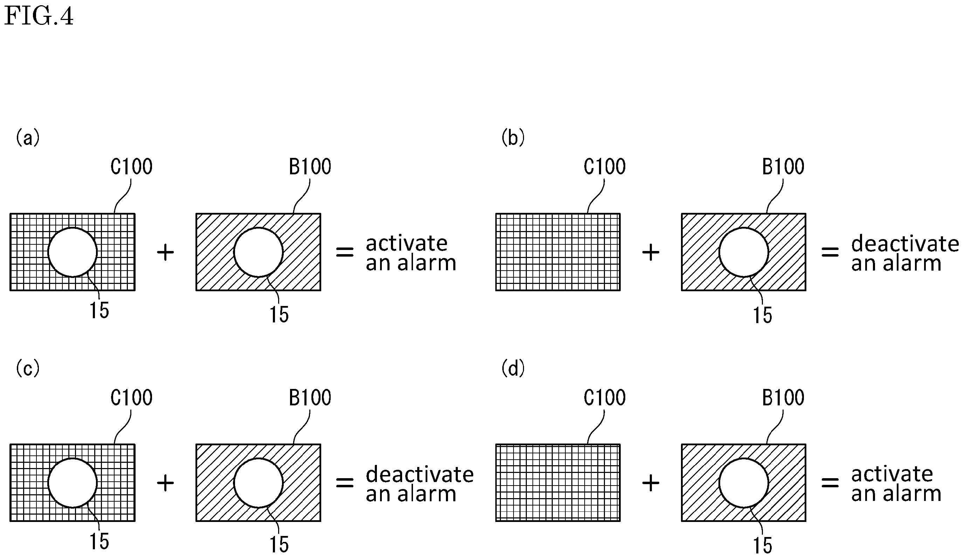

Based on the determination results by the object detection processing unit 135 and the object detection area determination unit 140, the object detection area alarm activation control unit 145 controls whether to activate an alarm when the detection target object 15 is present in the caution area B100. Specifically, two modes are designed to set following actions (to be described with reference to Figs. 4(a)-4(d)).

### [Alarm trigger mode]

Alarm activation/deactivation in this mode is controlled in the following manner. In a situation where a detection target object 15 is present in the determination area C100, an alarm is activated when any detection target object 15 is also present in the caution area B100. In a situation where a detection target object 15 is not present in the determination area C100, an alarm is deactivated when any detection target object 15 is present in the caution area B100.

### [Alarm deactivation mode]

Alarm activation/deactivation in this mode is controlled in the following manner. In a situation where a detection target object 15 is present in the determination area C100, an alarm is deactivated when any detection target object 15 is also present in the caution area B100. In a situation where a detection target object 15 is not present in the determination area C100, an alarm is activated when any detection target object 15 is present in the caution area B100.

Preferably, one of these modes is selectably applicable as required. For example, an applied mode may be stored in the memory 160, and the object detection area alarm activation control unit 145 may control alarm activation in accordance with the stored mode.

Additionally, for example, in a case where a particular caution area B100 needs to be disabled manually, a dedicated switch may be provided and connected, as an external input, to the object detection area alarm activation control unit 145.

When the object detection area determination unit 140 has determined the presence of an object in the caution area B 100, the alarm activation output control unit 150 may output an alarm activation signal to an output terminal or may provide an LED display. Alternatively, the alarm activation output control unit 150 may be arranged to report confirmed alarm activation information in the caution area B100 externally via the Ethernet. The output destination and the output method are, however, not limited thereto.

Preferably, the distance data acquisition unit 130, the object detection processing unit 135, the object detection area determination unit 140, the object detection area alarm activation control unit 145, the alarm activation output control unit 150, the memory 160, etc. are configured by a device-embedded one-chip microcomputer and its software processing, for example. Since the above-described judgment/determination processing, etc. can be implemented by pattern matching or a like method, use of a relatively inexpensive one-chip microcomputer can contribute to cost reduction of the laser scanning sensor 100 as a whole. Having said that, use of a one-chip microcomputer is not obligatory.

### 1.2 Basic operation of the laser scanning sensor 100

Fig. 3 is a schematic illustration exemplifying the caution area B100 and the determination area C100 defined in the detection area A100 by the laser scanning sensor 100.

The caution area B100 is set as a zone to be actually monitored in the detection area A100, against entry of an object 15. The determination area C100 is set as a zone to control object detection in the caution area B100. Note that detection of an object 15 in the determination area C100 does not activate an alarm by itself. In other words, an alarm is activated or deactivated by detection of an object 15 in the caution area B100, based on a detection result of an object 15 in the determination area C100.

Figs. 4(a)-4(d) are illustrations for describing alarm activation control in two modes (i.e., an alarm trigger mode and an alarm deactivation mode) that set actions for controlling whether the laser scanning sensor 100 should activate an alarm. At the time of installation, etc., either of these two modes is set according to the installation site, the installation target, etc., and one or more required caution areas B100 and corresponding determination areas C100 are set properly.

### [Alarm trigger mode]

As shown in Fig. 4(a), in a situation where an object 15 is detected in the determination area C100, this mode activates an alarm when any object 15 is detected in the caution area B100.

On the other hand, as shown in Fig. 4(b), in a situation where an object 15 is not detected in the determination area C100, this mode deactivates an alarm when any object 15 is detected in the caution area B100.

### [Alarm deactivation mode]

As shown in Fig. 4(c), in a situation where an object 15 is detected in the determination area C100, this mode deactivates an alarm when any object 15 is detected in the caution area B100.

On the other hand, as shown in Fig. 4(d), in a situation where an object 15 is not detected in the determination area C100, this mode activates an alarm when any object 15 is detected in the caution area B100.

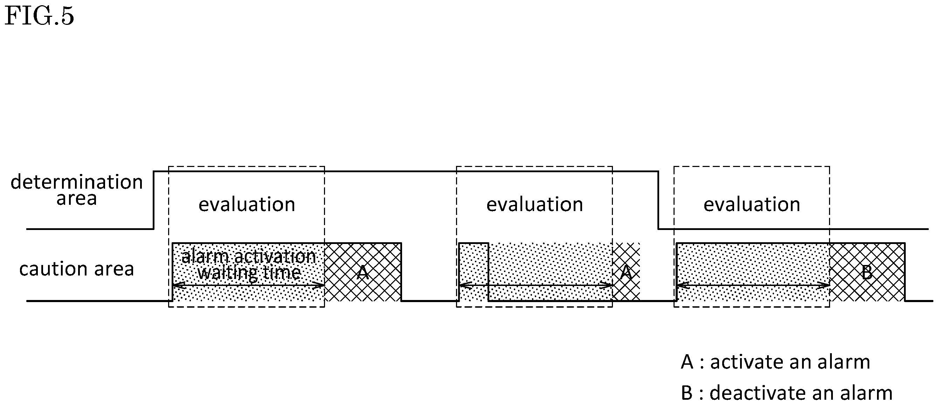

Fig. 5 is a timing diagram exemplifying a timing setting for evaluating object detection statuses in the caution area B100 and the determination area C100 by the laser scanning sensor 100. The determination operation may be set to either a limited determination operation performed only during the alarm activation waiting time or a constant determination operation. The above-mentioned timing diagram corresponds to the former operation.

According to the action that is set in advance at the time of installation, etc., the laser scanning sensor 100 evaluates object detection statuses in the caution area B100 and the determination area C100, only during the alarm activation waiting time. As indicated by the waveforms on the left in Fig. 5, the laser scanning sensor 100 retains the evaluation result after a lapse of the alarm activation waiting time until the object 15 in the caution area B100 disappears, and continues an alarm activation signal output during this period.

The waveforms in the middle in Fig. 5 concern a case where the object 15 in the caution area B100 has disappeared within the alarm activation waiting time. As far as the alarm activation condition was fulfilled in the alarm activation waiting time, it is preferable to activate an alarm for a short time in order to announce the fulfillment of the alarm activation condition.

The waveforms on the right in Fig. 5 concern a case where an object 15 is not detected in the determination area C100. Even when an object 15 is detected in the caution area B100, an alarm is deactivated as far as an object 15 is still undetected in the determination area C100 after a lapse of the alarm activation waiting time.

Incidentally, the laser scanning sensor 100 may also be set to perform constant evaluation of the object detection statuses in the caution area B100 and the determination area C100.

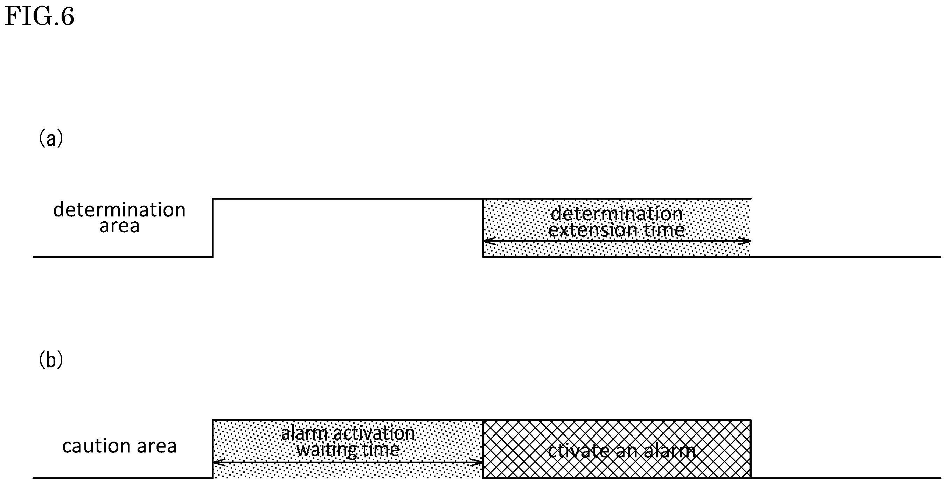

Fig. 6 is a timing diagram that describes a determination extension time and an alarm activation waiting time that are set to adjust a timing to start a determination operation by the laser scanning sensor 100. Fig. 6(a) shows a determination extension time, and Fig. 6(b) shows an alarm activation waiting time.

During the determination extension time, as shown in Fig. 6(a), the status of an object 15 in the determination area C100 is kept as "present" even after an object 15 detected in the determination area C100 has disappeared.

During the alarm activation waiting time, as shown in Fig. 6(b), alarm activation for the caution area B100 is withheld even after an object 15 has been detected in the caution area B 100.

### 1.3 Usage example of the laser scanning sensor 100

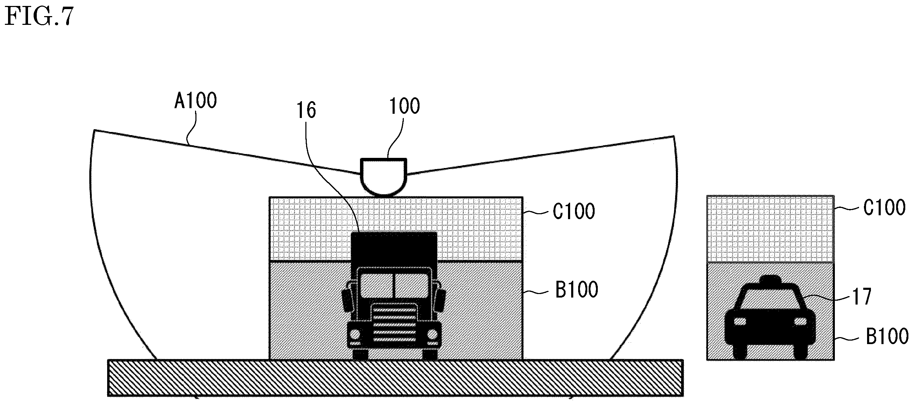

Fig. 7 is a schematic illustration of a usage example for distinguishably detecting a truck 16 and any other object such as a passenger vehicle 17, in a truck-only parking space or the like.

As shown in Fig. 7, the laser scanning sensor 100 is installed above the parking space, oriented downward, and defines a vertical detection area A100. A rectangular caution area B100 is defined from the ground to a predetermined height (lower than the vehicle height of the truck 16 and higher than the vehicle height of the passenger vehicle 17). A rectangular determination area C100 is defined adjacently above the caution area B100.

Details of settings are given below.

| | |
|---|---|
| Action: | deactivate an alarm |
| Operation: | during the alarm activation waiting time |
| Determination condition: | determination area |
| Alarm activation waiting time: | 2 seconds |
| Determination delay time: | 0 seconds |

This usage example utilizes a detection time lag. When the truck 16 enters the truck-only parking space, its low front cabin enters the caution area B100 first, and its high rear cargo box is detected a little later.

An alarm is activated against the passenger vehicle 17 that does not reach the determination area C100, whereas an alarm is not activated against the truck 16 that reaches the determination area C100.

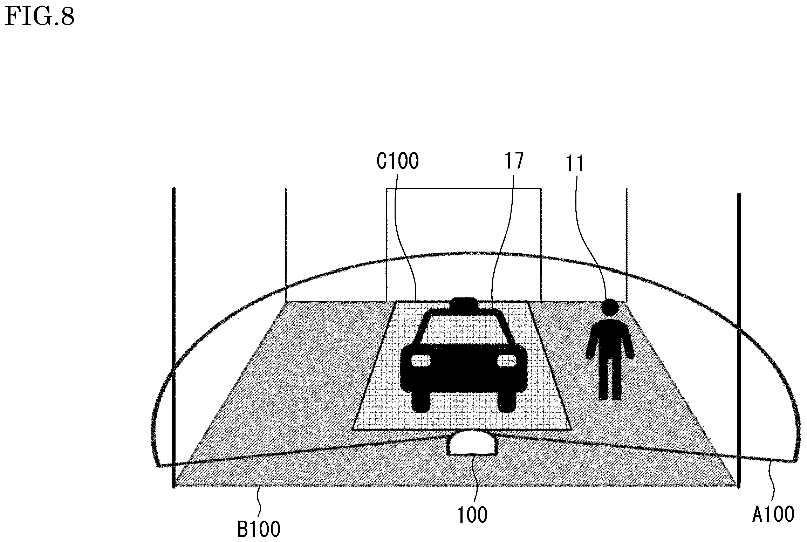

Fig. 8 is a schematic illustration of a usage example for detecting a car break-in, in a parking lot or the like.

As shown in Fig. 8, the laser scanning sensor 100 is installed at an end of the parking lot, oriented inward, and defines a horizontal detection area A100. A rectangular caution area B100 corresponds to a parking space for the vehicle 17. A determination area C100 surrounds the caution area B100.

Details of settings are given below.

| | |
|---|---|
| Action: | trigger an alarm |
| Operation: | during the alarm activation waiting time |
| Determination condition: | determination area |
| Alarm activation waiting time: | 300 seconds (5 minutes) |
| Determination delay time: | 0 seconds |

In this usage example, while the vehicle 17 is parked in the determination area C100, an alarm is activated against a thief 11 who has entered the caution area B100 and stayed around the vehicle 17 for five minutes or longer.

If the thief 11 is gone within five minutes, an alarm is activated for a short time in order to announce the presence of some kind of object 15 in the caution area B100.

When no vehicle 17 is present in the determination area C100, an alarm is not activated against any person 10 who has stayed for five minutes or longer.

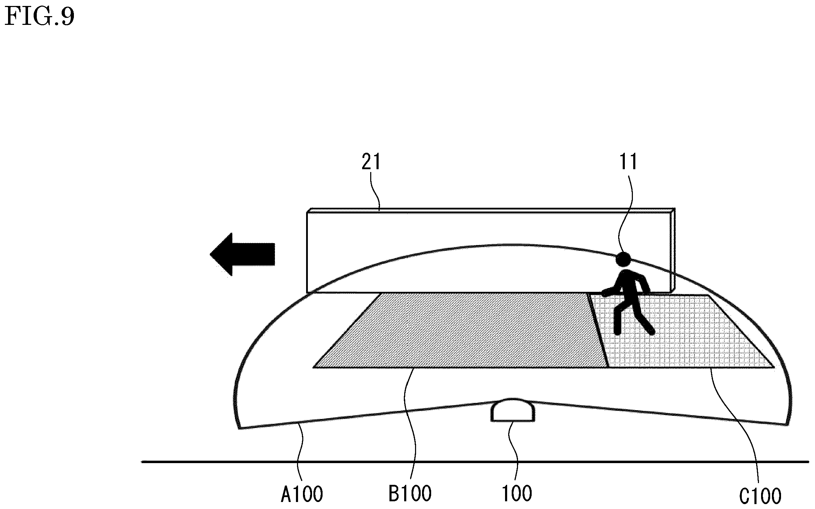

Fig. 9 is a schematic illustration of a usage example for detecting an intruder 11 on the premises of a building or the like.

As shown in Fig. 9, the laser scanning sensor 100 is installed across a passageway to the premises, oriented toward a side wall 21 in the passageway, and defines a horizontal detection area A100. A rectangular caution area B100 is defined in a zone having a predetermined length along the passageway. A rectangular determination area C100 is adjacent to an exterior side of the caution area B100 (In the drawing, the exterior side is a side opposite to the inward direction indicated by a bold arrow.). The determination area C100 is relatively smaller than the caution area B100 in order that a time of passage through the determination area C100 is shorter than a time of passage through the caution area B 100.

Details of settings are given below.

| | |
|---|---|
| Action: | trigger an alarm |
| Operation: | constant |
| Determination condition: | determination area |
| Alarm activation waiting time: | 0 seconds |
| Determination delay time: | 5 seconds |

In this usage example, an alarm is activated against a person 10 entering the premises (traveling in the bold arrow direction in the drawing), whereas an alarm is not activated against a person 10 exiting the premises.

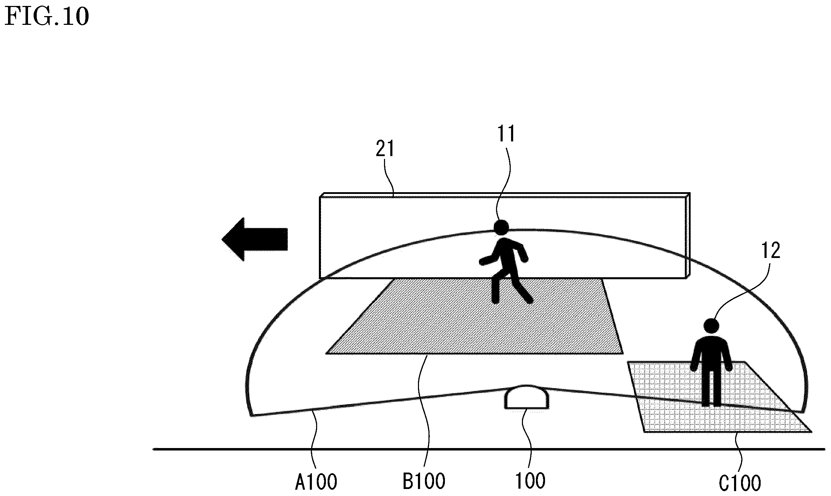

Fig. 10 is a schematic illustration of a usage example for detecting an intruder 11 at a doorway to the premises of a building or the like, under surveillance of a security guard.

As shown in Fig. 10 and similar to Fig. 9, the laser scanning sensor 100 is installed across a passageway to the premises, oriented toward a side wall 21 in the passageway, and defines a horizontal detection area A100. A rectangular caution area B100 is similarly defined in a zone having a predetermined length along the passageway. A rectangular determination area C100 is defined, however, at a post of a security guard 12 near the caution area B100.

Details of settings are given below.

| | |
|---|---|
| Action: | deactivate an alarm |
| Operation: | constant |
| Determination condition: | determination area |
| Alarm activation waiting time: | 5 seconds |
| Determination delay time: | 0 seconds |

In this usage example, while the security guard 12 stays in the determination area C100, an alarm is not activated against a person 10 passing through the caution area B100.

If an intruder 10 enters the caution area B100 while the security guard 12 is away from the determination area C100, an alarm is activated after a passage of five seconds. However, if the security guard 12 comes back to the determination area C100 within five seconds, an alarm is not activated.

### 1.4 Processing flow of the laser scanning sensor 100

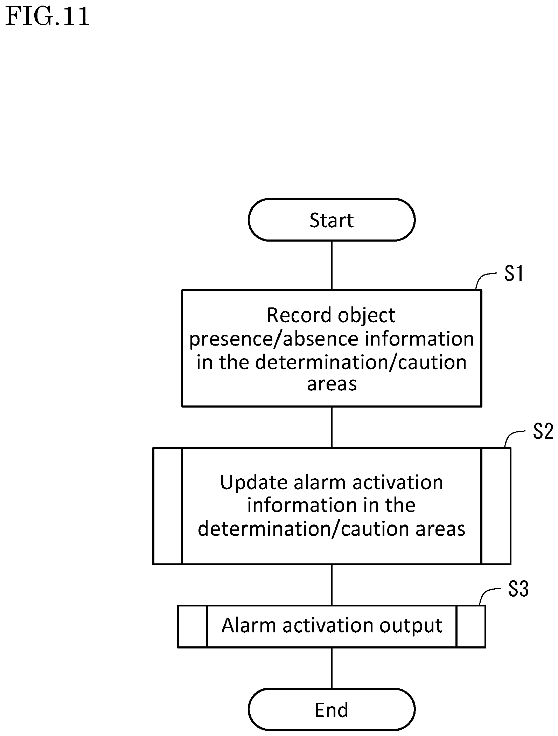

Fig. 11 is a flowchart showing entire processing of the laser scanning sensor 100.

As shown in Fig. 11, the laser scanning sensor 100 initially records object presence/absence information in the determination/caution areas (Step S1), then calls a subroutine for updating alarm activation information in the determination/caution areas (Step S2), finally calls a subroutine for alarm activation output (Step S3), and ends the entire processing.

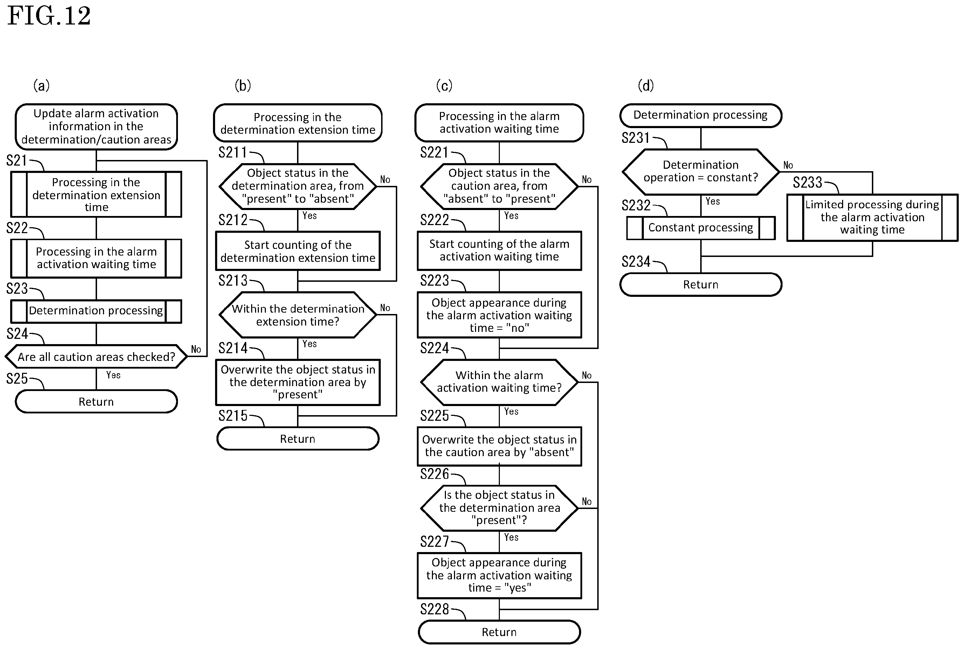

Fig. 12(a) is a flowchart describing the subroutine for updating alarm activation information in the determination/caution areas. Fig. 12(b) is a flowchart describing a subroutine for processing in the determination extension time. Fig. 12(c) is a flowchart describing a subroutine for processing in the alarm activation waiting time. Fig. 12(d) is a flowchart describing a subroutine for determination processing.

As shown in Fig. 12(a), the subroutine for updating alarm activation information in the determination/caution areas initially calls the subroutine for processing in the determination extension time (Step S21), then calls the subroutine for processing in the alarm activation waiting time (Step S22), and thereafter calls the subroutine for determination processing (Step S23).

Next, the subroutine for updating alarm activation information in the determination/caution areas determines whether all caution areas are checked (Step S24). If the determination result is YES, the subroutine returns (Step S25). If the determination result is NO, the subroutine goes back to Step S21.

As shown in Fig. 12(b), the subroutine for processing in the determination extension time initially determines whether the object status in the determination area has changed from "present" to "absent" (Step S211). If the determination result is YES, the subroutine starts counting of the determination extension time (Step S212), and goes to Step S213. If the determination result is NO, the subroutine jumps to Step S213.

The next step is to determine whether the time is within the determination extension time (Step S213). If the determination result is YES, the subroutine overwrites the object status in the determination area by "present" (Step S214), and returns (Step S215). If the determination result is NO, the subroutine jumps to Step S215 and returns.

As shown in Fig. 12(c), the subroutine for processing in the alarm activation waiting time initially determines whether the object status in the caution area has changed from "absent" to "present" (Step S221). If the determination result is YES, the subroutine starts counting of the alarm activation waiting time (Step S222), sets an object appearance flag during the alarm activation waiting time to "no" (Step S223), and goes to Step S224. If the determination result is NO, the subroutine jumps to Step S224.

The next step is to determine whether the time is within the alarm activation waiting time (Step S224). If the determination result is YES, the subroutine overwrites the object status in the caution area by "absent" (Step S225), and goes to Step S226. If the determination result is NO, the subroutine jumps to Step S228 and returns. The further step is to determine whether the object status in the determination area is "present" (Step S226). If the determination result is YES, the subroutine sets the object appearance flag during the alarm activation waiting time to "yes" (Step S227), and returns (Step S228). If the determination result is NO, the subroutine jumps to Step S228 and returns.

As shown in Fig. 12(d), the subroutine for determination processing initially determines whether the determination operation is "constant" or not (Step S231). If the determination result is YES, the subroutine calls a subroutine for constant processing (Step S232) and returns (Step S234). If the determination result is NO, the subroutine calls a subroutine for limited processing during the alarm activation waiting time, and returns (Step S234).

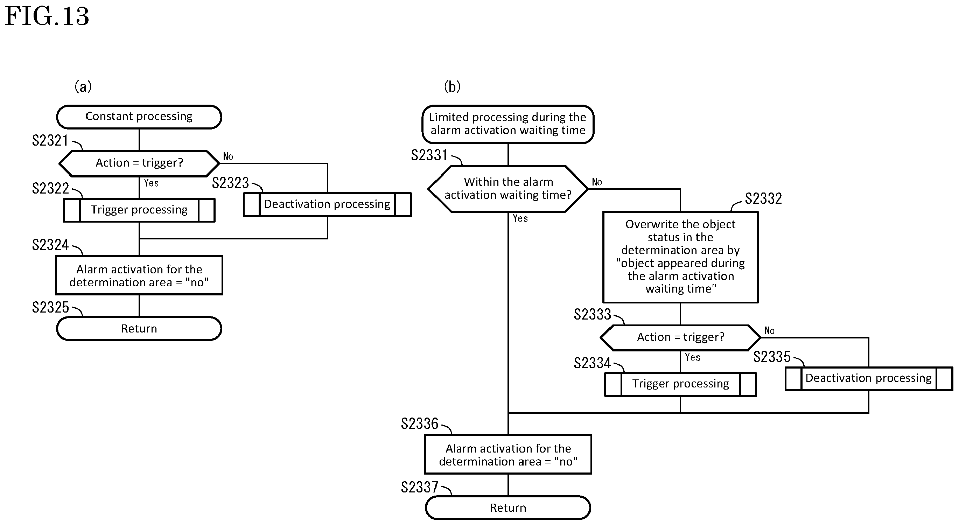

Fig. 13 shows flowcharts for determination operations, wherein Fig. 13(a) is a flowchart of the subroutine for constant processing, and Fig. 13(b) is a flowchart of the subroutine for limited processing during the alarm activation waiting time.

As shown in Fig. 13(a), the subroutine for constant processing initially determines whether the action is "trigger" (Step S2321). If the determination result is YES, the subroutine calls a subroutine for trigger processing (Step S232), and goes to Step S2324. If the determination result is NO, the subroutine calls a subroutine for deactivation processing (Step S2323), and goes to Step S2324.

In the next step, the subroutine for constant processing sets an alarm activation flag for the determination area to "no" (Step S2324), and returns (Step S2325).

As shown in Fig. 13(b), the subroutine for limited processing during the alarm activation waiting time determines whether the time is within the alarm activation waiting time (Step S2331). If the determination result is YES, the subroutine jumps to Step S2326. If the determination result is NO, the subroutine overwrites the object status in the determination area by "object appeared during the alarm activation waiting time" (Step S2332). The following step is to determine whether the action is "trigger" (Step S2323). If the determination result is YES, the subroutine calls the subroutine for trigger processing (Step S2324), and goes to Step S2326. If the determination result is NO, the subroutine calls the subroutine for deactivation processing (Step S2325), and goes to Step S2326.

In the next step, the subroutine for limited processing during the alarm activation waiting time sets an alarm activation flag for the determination area to "no" (Step S2326), and returns (Step S2327).

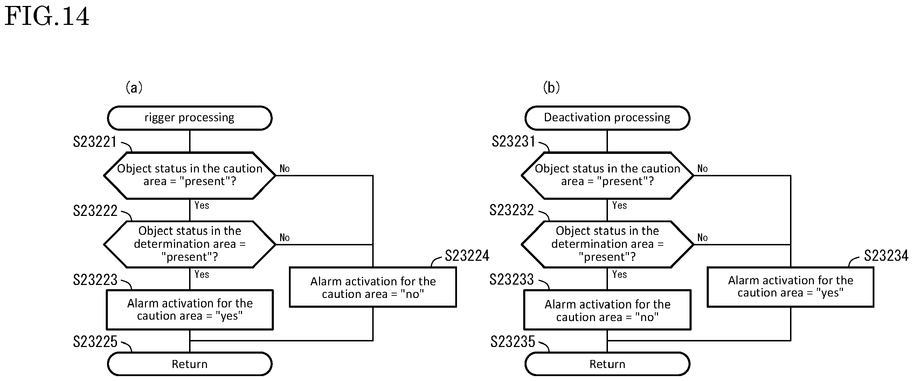

Fig. 14 shows flowcharts for actions, wherein Fig. 14(a) is a flowchart of the subroutine for trigger processing, and Fig. 14(b) is a flowchart of the subroutine for deactivation processing.

As shown in Fig. 14(a), the subroutine for trigger processing initially determines whether the object status in the caution area is "present" (Step S23221). If the determination result is YES, the subroutine further determines whether the object status in the determination area is "present" (Step S23222). If the determination result is YES, the subroutine sets an alarm activation flag for the caution area to "yes" (Step S23223), and returns (Step S23225). If the determination result is NO in Step S23221 or Step S23222, the subroutine sets the alarm activation flag for the caution area to "no" (Step S23224), and returns (Step S23225).

As shown in Fig. 14(b), the subroutine for deactivation processing initially determines whether the object status in the caution area is "present" (Step S23231). If the determination result is NO, the subroutine jumps to Step S23233. If the determination result is YES, the subroutine further determines whether the object status in the determination area is "present" (Step S23232). If the determination result is YES, the subroutine sets the alarm activation flag for the caution area to "no" (Step S23233), and returns (Step S23225). If the determination result is NO in Step S23232, the subroutine sets the alarm activation flag for the caution area to "yes" (Step S23234), and returns (Step S23235).

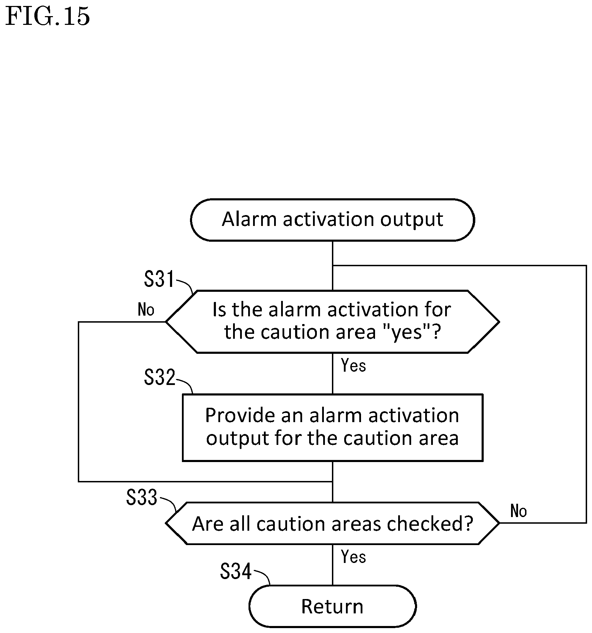

Fig. 15 is a flowchart of the subroutine for alarm activation output.

As shown in Fig. 15, the subroutine for alarm activation output initially determines whether the alarm activation flag for the caution area is "yes" (Step S31). If the determination result is YES, the subroutine provides an alarm activation output for the caution area (Step S31), and goes to Step S33. If the determination result is NO, the subroutine jumps to Step S33.

Then, the subroutine for alarm activation output determines whether all caution areas are checked (Step S33). If the determination result is YES, the subroutine returns (Step S34). If the determination result is NO, the subroutine goes back to Step S31.

The configuration of the first embodiment described above can provide optimum security according to the installation site, the detection target object, etc., by selecting either of the alarm trigger mode or the alarm deactivation mode and by setting the caution area B100 and the determination area C100 properly.

### Second embodiment

The second embodiment, to be described below, is intended to improve target detection performance and inhibit false alarms in the laser scanning sensor of the above-described first embodiment. For this purpose, the second embodiment is arranged to combine an image acquired by an internal camera. The following description mainly relates to differences from the first embodiment, and uses the same reference signs to the same components.

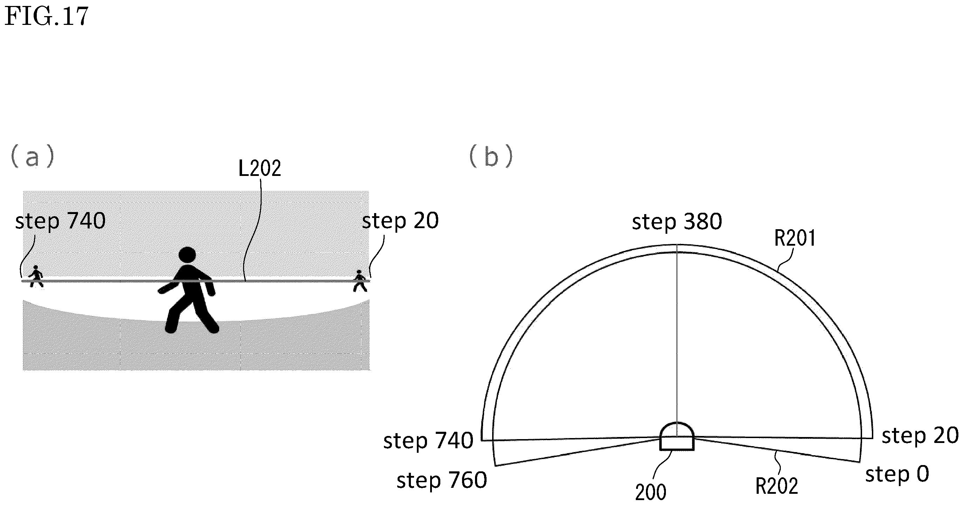

Fig. 16(a) is a front view of a laser scanning sensor 200 according to the second embodiment of the present invention. Fig. 16(b) is a schematic plan view for comparison between an image-capturing range R201 by an internal camera 201 and a laser irradiation range R202. Fig. 17(a) is a schematic illustration that exemplifies an image captured by the internal camera 201 as installed horizontally. Fig. 17(b) is a schematic plan view that exemplifies step numbers in the laser irradiation range R202 in Fig. 16(b).

As shown in Fig. 16(a), a laser irradiator/receiver 202 is provided approximately at a center of a front face of the laser scanning sensor 200, and the internal camera 201 is provided near a top of the laser irradiator/receiver 202. The internal camera 201 may be connected to, for example, a unit that corresponds to the object detection area alarm activation control unit 145 in the first embodiment.

As shown in Fig. 16(b), the laser irradiation range R202 is centered at the front and extends over 180 degrees. To cover the laser irradiation range R202 entirely, the internal camera 201 may be a fish-eye camera, for example, or the internal camera 201 may be composed of a plurality of built-in cameras and may combine images taken by these cameras.

Prior calibration is required to identify the positional relationship between steps in the laser irradiation range R202 and pixels in the image-capturing range R201. To give an example, suppose that a laser irradiation line L202 in the image of Fig. 17(a) captured by the internal camera 201 corresponds to step 20 at the right end and corresponds to step 740 at the left end as shown in Fig. 17(a). In this case, for example, a step-pixel table as below may be stored in the memory 160.

| | |
|---|---|
| step | pixel |
| 20 | 1919 |

| | |
|---|---|
| 21 | 1918 |
| 22 | 1917 |

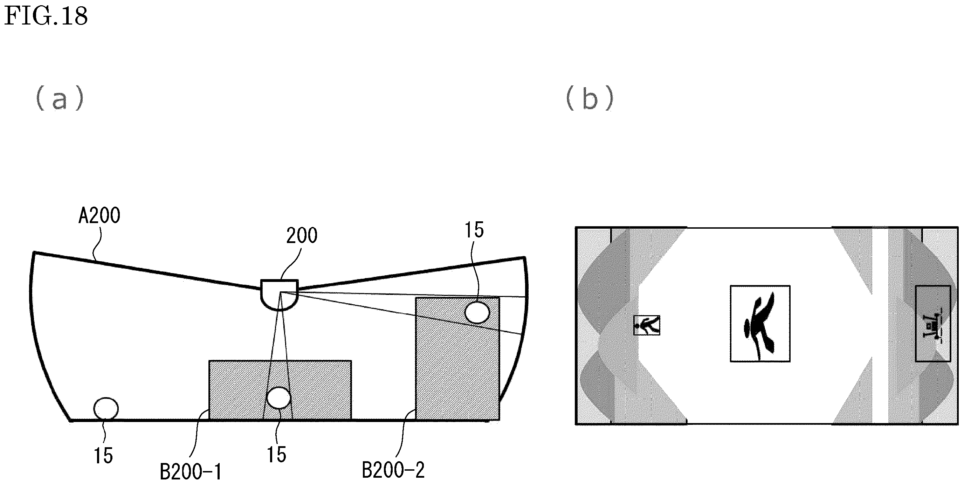

Fig. 18(a) is a schematic illustration of a laser scanned image captured when an entering object is detected by the laser scanning sensor 200 as installed vertically. Fig. 18(b) is a schematic illustration that exemplifies an image captured by the internal camera 201.

As shown in Fig. 18(a), a detection area A200 of the laser scanning sensor 200 includes a first caution area B200-1 defined approximately just under the laser scanning sensor 200, and a second caution area B200-2 defined closer to an end. The laser scanning sensor 200 initially detects a traveling object 15 by image processing using the internal camera 201. Since the laser steps and the camera pixels are calibrated with each other in advance, as described above, the laser scanning sensor 200 determines whether any traveling object 15 is present in either of these caution areas, based on the step number of the traveling object 15 detected by image processing.

According to this embodiment, an image captured by the internal camera 201 is assigned to the determination condition in the caution areas. The resulting laser scanning sensor can determine the presence/absence of an object by combining the detection of an object by the laser range finder 110 and the detection of a traveling object by the internal camera 201, and can eventually prevent false alarms due to fog or the like. For example, even the thinnest fog may reflect a laser beam and may sometimes be detected as a non-existent object. However, in the image acquired by the internal camera 201, fog is not detected as a traveling object 15, so that false alarms can be prevented.

### Other embodiments

The laser scanning sensor may be a 3D laser scanning sensor that can perform detection also in a height direction. The internal camera 201 in the second embodiment may be replaced with a stereo camera to acquire a 3D image. The thus arranged laser scanning sensor can detect a target object more accurately and can provide security more appropriately.

The present invention can be embodied and practiced in other different forms without departing from the gist and essential characteristics of the present invention. Therefore, the above-described embodiments are considered in all respects as illustrative and not restrictive. The scope of the invention is indicated by the appended claims rather than by the foregoing description. All variations and modifications falling within the equivalency range of the appended claims are intended to be embraced therein.

### Reference Signs List

- 10: human body, person
- 11: thief, intruder
- 12: security guard
- 15: object, traveling object
- 16: truck
- 17: passenger vehicle
- 18: train
- 20: doorway
- 21: side wall
- 100: laser scanning sensor (first embodiment)
- A100: detection area
- B100: caution area
- C100: determination area
- 110: laser range finder
- 120: scanning mechanism (scanning mechanism unit)
- 130: distance data acquisition unit (distance information acquisition unit)
- 135: object detection processing unit
- 140: object detection area determination unit
- 145: object detection area alarm activation control unit
- 150: alarm activation output control unit
- 160: memory (information storage unit)
- 200: laser scanning sensor (second embodiment)
- 201: internal camera (image capturing device)
- 202: laser irradiator/receiver
- 900: laser scanning sensor (prior art)
- A900: detection area

## Claims

1. A laser scanning sensor comprising:
a laser range finder that emits a laser beam and measures a distance to an object that is present in an emission direction of the laser beam, based on a time until the emitted beam is reflected by the object and returns to the laser range finder;
a scanning mechanism unit that changes a measurement direction for the laser range finder;
a distance information acquisition unit that defines a detection area by periodically performing the measurement by the laser range finder, with the measurement direction being changed by the scanning mechanism unit, and that acquires distance information in the detection area, the distance information in the detection area being acquired in each measurement direction on a time-series basis;
an information storage unit that stores reference distance information in each measurement direction as detection area information, and that stores at least one caution area and a corresponding determination area, the at least one caution area being set as a zone to be actually monitored in the detection area, and the determination area being set correspondingly to each of the at least one caution area;
an object detection processing unit that extracts one or more portions potentially corresponding to a detection target object, from the distance information acquired by the distance information acquisition unit, and that determines whether each of the one or more extracted portions is the detection target object, based on a time-series travel status of the respective extracted portion;
an object detection area determination unit that determines, based on a determination result by the object detection processing unit, whether the detection target object is present in both the caution area and the determination area or whether the detection target object is present in the determination area;
an alarm activation control unit that controls, based on the determination result by the object detection processing unit and a determination result by the object detection area determination unit, whether to activate an alarm when the detection target object is present in the caution area; and
an alarm activation output control unit that outputs an alarm activation signal in response to the control by the alarm activation control unit.

2. The laser scanning sensor according to claim 1,
wherein, in a situation where the detection target object is present in the determination area, the alarm activation control unit provides control to activate an alarm when the detection target object is also present in the caution area; and, in a situation where the detection target object is not present in the determination area, the alarm activation control unit provides control to deactivate an alarm when the detection target object is present in the caution area.

3. The laser scanning sensor according to claim 1,
wherein, in a situation where the detection target object is present in the determination area, the alarm activation control unit provides control to deactivate an alarm when the detection target object is also present in the caution area; and, in a situation where the detection target object is not present in the determination area, the alarm activation control unit provides control to activate an alarm when the detection target object is present in the caution area.

4. The laser scanning sensor according to claim 1,
wherein the information storage unit can store a control mode for the alarm activation control unit, the control mode being selected from a first control mode and a second control mode,
wherein, provided that the control mode stored in the information storage unit is the first control mode,
in a situation where the detection target object is present in the determination area, the alarm activation control unit provides control to activate an alarm when the detection target object is also present in the caution area; and, in a situation where the detection target object is not present in the determination area, the alarm activation control unit provides control to deactivate an alarm when the detection target object is present in the caution area, and
wherein, provided that the control mode stored in the information storage unit is the second control mode,
in a situation where the detection target object is present in the determination area, the alarm activation control unit provides control to deactivate an alarm when the detection target object is also present in the caution area; and, in a situation where the detection target object is not present in the determination area, the alarm activation control unit provides control to activate an alarm when the detection target object is present in the caution area.

5. The laser scanning sensor according to any one of claims 1 to 4,
wherein the alarm activation control unit keeps a status that indicates the presence of the detection target object, for a first predetermined time that is set in advance, after the detection target object that was present in the determination area has disappeared.

6. The laser scanning sensor according to any one of claims 1 to 5,
wherein the alarm activation control unit withholds activation of an alarm, for a second predetermined time that is set in advance, after the detection target object was detected in the caution area.

7. The laser scanning sensor according to any one of claims 2 to 6,
further comprising a display device,
wherein, when the alarm activation control unit provides control to deactivate an alarm, the alarm activation output control unit provides an indication by the display device.

8. The laser scanning sensor according to any one of claims 1 to 7,
wherein the alarm activation output control unit externally reports confirmed alarm activation information in the caution area.

9. The laser scanning sensor according to any one of claims 1 to 8,
further comprising an operating unit that enables selection from an external input and an image processing result,
wherein the alarm activation control unit assumes that the detection target object is present in the determination area associated in advance, in accordance with the external input or the image processing result selected by the operating unit.

10. The laser scanning sensor according to any one of claims 1 to 8,
further comprising an image capturing device,
wherein the detection target object is detected based on an image processing result of an image acquired by the image capturing device, and
wherein the alarm activation control unit obtains the distance information corresponding to a position of the detection target object in the acquired image, and controls whether to activate an alarm when the detection target object is present in the caution area.
